# EUROPÄISCHE PATENTSCHRIFT

(11) **EP 3 143 854 B1**
(45) Veröffentlichungstag und Bekanntmachung des Hinweises auf die Patenterteilung: **26.06.2019**
(21) Anmeldenummer: 16177685.1
(22) Anmeldetag: 04.07.2016
(51) Int. Cl.: A01B 59/06

(54) **LANDWIRTSCHAFTLICHE ARBEITSMASCHINE**
AGRICULTURAL WORKING MACHINE
ENGIN AGRICOLE

(30) Priorität: 17.09.2015 DE 102015115704
(43) Veröffentlichungstag der Anmeldung: 22.03.2017
(73) Patentinhaber: CLAAS Tractor S.A.S., 78141 Vélizy-Villacoublay Cedex (FR)
(72) Erfinder: Pinard, Jean-Marc, 78460 Chevreuse (FR)
(74) Vertreter: CLAAS Gruppe

(56) Entgegenhaltungen:
- EP-A1- 1 238 577
- EP-A1- 2 520 447
- EP-A2- 1 862 050
- US-A1- 2010 096 203
- US-A1- 2015 077 557

## Beschreibung

Die vorliegende Erfindung betrifft eine landwirtschaftliche Arbeitsmaschine gemäß dem Oberbegriff des Anspruches 1.

Landwirtschaftliche Arbeitsmaschinen, insbesondere Traktoren, werden zu unterschiedlichsten Arbeiten eingesetzt. Dabei werden benötigte Anbaugeräte beispielsweise an einem front- oder heckseitig an der Arbeitsmaschine angeordneten Kraftheber angebracht. Unter anderem werden Arbeitsmaschinen bei der Arbeit mit Strohballen, Silageballen sowie beim Überladen von Erntegut, beispielsweise auf einen Anhänger, eingesetzt, wofür ein sogenannter Frontlader mittels Aufnahmekonsolen lösbar an der landwirtschaftlichen Arbeitsmaschine anbringbar ist. Die Aufnahmekonsolen sind dabei üblicherweise beiderseits einer Motorhaube der Arbeitsmaschine angeordnet, wobei die Aufnahmekonsolen einen vertikalen Abschnitt aufweisen, an welchem der Frontlader festlegbar ist. Ein Frontlader kann dabei als Abstellfrontlader konstruiert sein, welcher in einer aufrechten Position abgestellt werden kann, wodurch der Arbeitsaufwand für das Aufnehmen und Absetzten des Frontladers verringert werden kann.

Aus der DE 3831212 A1 ist eine Befestigung eines Anbaugerätes an einem Arbeitsfahrzeug, insbesondere eines Frontladers an einem Ackerschlepper, bekannt, wobei seitlich am Fahrzeugrahmen zwei Konsolen angeordnet sind, an denen ein abgestellter Frontlader anbaubar ist. Nachteilig hierbei ist, dass ein genaues Ausrichten der Arbeitsmaschine auf den abgestellten Frontlader oder eine anderes aufzunehmendes oder anzuhängendes Arbeitsgerät zeitintensiv sein kann. Zudem kann, besonders bei großen Arbeitsmaschinen, die Übersichtlichkeit aufgrund der Abmessungen oder der Position eines Bedieners der Arbeitsmaschine beeinträchtigt sein, so dass ein Heranfahren an das Arbeitsgerät und ein Ankoppeln desselben weiter erschwert werden. Zudem kann es aufgrund einer beeinträchtigten Sicht auf das anzukoppelnde oder abzusetzende Arbeitsgerät beim Heranfahren oder einem Wegfahren zu einer Kollision der Arbeitsmaschine mit dem Anbaugerät kommen, wodurch die Arbeitsmaschine und das Anbaugerät beschädigt werden können.

Aus der US 2015/0077557 A1 oder der EP 1 238 577 A1 ist weiterhin eine Vorrichtung zum Koppeln eines Gerätes an ein Arbeitsfahrzeug bekannt. Zur Entlastung der Bedienungsperson und zur Erleichterung und Beschleunigung des Koppelvorgangs wird eine Sensoreinrichtung vorgesehen.

Es ist daher eine Aufgabe der vorliegenden Erfindung eine landwirtschaftliche Arbeitsmaschine bereitzustellen, welche ein verbessertes Aufnehmen und/oder Absetzten eines Anbaugerätes durch die Arbeitsmaschine ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Eine landwirtschaftliche Arbeitsmaschine mit einer Karosserie, welche mindestens ein Verkleidungselement und mindestens eine erste Aufnahmevorrichtung zur Aufnahme eines Arbeitsgerätes umfasst, wobei erfindungsgemäß ein arbeitsmaschinenseitig angeordnetes Sensorsystem mit mindestens einer Sensoreinheit und einer Auswerteeinheit vorgesehen ist, wobei durch das Sensorsystem eine Relativposition eines aufzunehmenden und/oder abzulegenden Anbaugerätes der Arbeitsmaschine relativ zu der Arbeitsmaschine bestimmbar ist und die Karosserie eine Motorraumverkleidung umfasst, wobei mindestens eine Sensoreinheit zur seitlichen Messung eines Abstands eines Anbaugerätes zur Karosserie an der Motorraumverkleidung angeordnet ist.

Durch das arbeitsmaschinenseitig angeordnete Sensorsystem kann eine Relativposition eines aufzunehmenden und/oder abzulegenden Anbaugerätes bezogen auf die Arbeitsmaschine bestimmt werden. Die Position des Anbaugerätes kann dabei relativ zu einer Karosserie der Arbeitsmaschine durch das Sensorsystem bestimmt werden, wobei die Karosserie auch ein Verkleidungselement der Arbeitsmaschine und/oder eine Aufnahmevorrichtung für ein Anbaugerät umfasst. Das Sensorsystem umfasst zur Positionsbestimmung des Anbaugerätes mindestens eine Sensoreinheit sowie eine Auswerteeinheit, wobei die Sensoreinheit Signale generiert, aus welchen die Position des Anbaugerätes durch die Auswerteinheit bestimmbar ist. Im Sinne der Erfindung ist ein aufzunehmendes und/oder abzulegendes Anbaugerät noch nicht oder nicht mehr fest mit der Arbeitsmaschine gekoppelt, so dass beispielsweise die Arbeitsmaschine zur Aufnahme an das Anbaugerät herangefahren oder nach einem Abstellen des Anbaugerätes von diesem weggefahren werden kann. Durch das Sensorsystem kann bei einem Heranfahren und einem Wegfahren von dem Anbaugerät die Relativposition zur Arbeitsmaschine ermittelt werden. Dies hat den Vorteil, dass beispielsweise ein Bediener der Arbeitsmaschine bei einem Heranfahren an ein Anbaugerät in Form eines abgestellten Frontladers auch bei ungünstigen Sichtverhältnissen eine Kollision mit dem Anbaugerät vermeiden kann, so dass Schäden an der Arbeitsmaschine und dem Anbaugerät vermieden werden können.

In einer bevorzugten Ausgestaltung der Erfindung ist eine Relativposition des Anbaugerätes zu der Arbeitsmaschine mittels einer Abstandsmessung ermittelbar. Bei einer Abstandsmessung ist der Abstand des Anbaugerätes zu, insbesondere der Karosserie, der Arbeitsmaschine bestimmbar, wobei die Sensoreinheit als Abstandsmesser ausgebildet sein kann. Durch eine Abstandsmessung ist ein Abstand zwischen der Arbeitsmaschine und dem Anbaugerät an dem Ort der Sensoreinheit und in dessen Messrichtung bestimmbar, wodurch eine Relativposition des Anbaugerätes zu der Karosserie an dem Ort und in der Messrichtung der Sensoreinheit bestimmbar ist. Basierend auf mehreren, zeitgleich bestimmten Abständen, beispielsweise durch eine oder mehrere entsprechend ausgestaltete Sensoreinheiten, ist durch die Auswerteeinheit die Relativposition des Anbaugerätes zur Arbeitsmaschine genauer bestimmbar.

Besonders bevorzugt umfasst das Sensorsystem mindestens eine Sensoreinheit, durch welche ein Abstand eines Anbaugerätes in einer Längsrichtung zur Karosserie messbar ist. Eine seitliche Abstandsmessung erfolgt dabei im Wesentlichen senkrecht zu einer Längsachse der Arbeitsmaschine, wohingegen eine Messung in Längsrichtung zur Karosserie im Wesentlichen parallel zu der Längsachse der Arbeitsmaschine erfolgen kann. Eine Abstandsmessung kann im Wesentlichen senkrecht zu einer Oberfläche der Karosserie erfolgen, in welcher die Sensoreinheit angeordnet ist. Mehrere Sensoreinheiten können beispielsweise paarweise angeordnet sein, wobei zwei seitlich angeordnete Sensoreinheiten oder eine seitliche und eine in Längsrichtung messende Sensoreinheit kombiniert werden können. So können beispielsweise zwei an gegenüberliegenden Seiten und in entgegengesetzte Richtungen angeordnete und messende Sensoreinheiten einem Bediener ein sicheres berührungsloses Einfahren zwischen zwei Begrenzungen wie einen abgestellten Frontlader ermöglichen. Durch seitlich auf derselben Seite angeordneten Sensoreinheiten, welche in Längsrichtung zueinander beabstandete sein können, kann beispielsweise eine Annäherung an ein Anbaugerät zuverlässiger bestimmt werden, da die Sensoreinheiten entsprechend der veränderten Relativposition des Anbaugerätes entlang der Längsachse nacheinander ansprechen. Ebenfalls ist denkbar, Sensoreinheiten derart anzuordnen, dass auf derselben Seite sowohl eine seitlich Messung als auch eine Messung in Längsrichtung ermöglicht werden kann.

Gemäß der Erfindung umfasst die Karosserie eine Motorraumverkleidung, wobei mindestens eine Sensoreinheit zur seitlichen Messung eines Abstandes eines Anbaugerätes zur Karosserie an der Motorraumverkleidung angeordnet ist. Durch eine Anordnung einer Sensoreinheit in einer Motorraumverkleidung, insbesondere in einer Seitenfläche der Motorraumverkleidung, kann besonders bei einem Aufnehmen und/oder Ablegen eines Frontladers eine Kollision mit diesem vermieden werden, da bei der Aufnahme und/oder dem Abstellen des Frontladers die Arbeitsmaschine üblicherweise zumindest mit der Motorraumverkleidung zwischen Schwingen des Frontladers zu bewegen ist. Die Sensoreinheiten können auch paarweise an gegenüberliegenden Seiten der Motorraumverkleidung angeordnet sein, wodurch eine gleichzeitige Messung einer Relativposition des Frontladers beiderseits der Karosserie ermöglicht wird. Dies ermöglich ein besonders sicheres Aufnehmen und/oder Absetzten des Frontladers, da der Abstand zwischen dem Anbaugerät, insbesondere dem Frontlader, und der Karosserie der Arbeitsmaschine beidseitig bestimmt und ausgegeben werden kann, so dass ein Bediener die Arbeitsmaschine kollisionsfrei mittig zwischen den Schwingen des Frontladers an diesen heransteuern kann.

Ferner ist bevorzugt vorgesehen, dass mindestens eine Sensoreinheit zur Messung eines Abstandes in Längsrichtung an einer Aufnahmevorrichtung und/oder einer Fahrerkabine angeordnet ist. Die Sensoreinheit kann dabei parallel zu der Längsachse der Arbeitsmaschine einen Abstand messen und frontseitig und/oder heckseitig an, insbesondere der Karosserie, der Arbeitsmaschine angeordnet sein. Durch einen Sensor zur Messung in Längsrichtung kann ein Abstand zu einem Anbaugerät in Längsrichtung gemessen werden. Dies hat den Vorteil, dass für einen Bediener auch bei ungünstiger Sicht auf das Anbaugerät der Abstand in Fahrtrichtung zwischen Arbeitsmaschine und Anbaugerät zuverlässig bestimmbar ist und so eine Kollision vermieden werden kann. Denkbar ist auch, beispielsweise zwei Sensoreinheiten, welche in dieselbe Längsrichtung messen, nebeneinander anzuordnen, um so beispielsweise auch ein breiteres Anbaugerät zuverlässig zu erfassen, und/oder ein schräges Anfahren an ein front- oder heckseitig angeordnetes Anbaugerät zu vermeiden.

In einer bevorzugten Ausgestaltung der Erfindung weist die Sensoreinheit mindestens einen Sensor auf, welcher nach einem akustischen, opto-elektronischen und/oder elektro-magnetischen Messprinzip arbeitet. Eine Sensoreinheit kann mehrere Sensoren aufweisen, wobei der Messbereich der Sensoreinheit durch die Anzahl der Sensoren, die Anordnung der Sensoren zueinander und/oder das jeweilige Messprinzip der Sensoren bestimmbar ist. Ein Sensor mit einem akustischen Messprinzip kann beispielsweise ein kontinuierlich und/oder diskontinuierlich messender Ultraschallsensor sein. Vorteilhaft ist dabei, dass Ultraschallsensoren bewährte und zuverlässige Sensoren zur Abstandsmessung sind. Ein Sensor mit einem elektro-optischen Messprinzip kann beispielsweise ein Lasersensor, eine abstandsbestimmende Stereokamera oder eine abstandsbestimmende Kamera, eine sogenannte Time-Of-Flight-Kamera sein. Dies bietet den Vorteil, einen größeren Messbereich mit einem Sensor abdecken zu können. Ein elektro-magnetischer Sensor kann beispielsweise ein Radarsensor sein. Dieser hat den Vorteil, verdeckt einbaubar und somit besonders gegen Verschmutzung und/oder Beschädigung geschützt zu sein.

Vorteilhafterweise weist die Sensoreinheit einen Messbereich auf, wobei eine geometrische Ausgestaltung des Messbereiches in Abhängigkeit einer Anzahl an Sensoren, der Art der Sensoren und/oder der Anordnung der Sensoren bestimmbar ist. Unter einem Messbereich ist im Sinne der Erfindung ein räumlicher Bereich zu verstehen, innerhalb dessen ein Abstand zwischen der Arbeitsmaschine, insbesondere der Karosserie der Arbeitsmaschine, und einem Anbaugerät durch eine aktivierte Sensoreinheit messbar ist. Eine geometrische Ausgestaltung eines Messbereiches kann beispielsweise durch eine Anzahl und die geometrische Ausgestaltung einer Sensoreinheit bestimmt werden. Zudem kann der Messbereich durch die Art des Messprinzips der Sensoreinheit unterschiedlich beeinflusst werden. Der Messbereich kann dabei je nach Anbaugerät und Aufnahmevorrichtung unterschiedlich ausgebildet sein. So können beispielsweise für einen Frontlader zwei an gegenüberliegenden Seiten der Motorraumverkleidung angeordnete und messende Sensoreinheiten vorgesehen sein, welche jeweils einen länglichen, im Wesentlichen senkrecht angeordneten Messbereich aufweisen. Der längliche Messbereich hat dabei den Vorteil, dass der Frontlader unabhängig von der genauen vertikalen Anordnung beispielsweise seiner Schwingen, zuverlässig durch die Sensoreinheiten erfasst werden kann, da deren Messbereiche einen vertikalen Streifen erfassen. Bei einem front- und/oder heckseitig aufzunehmenden Anbaugerät kann der Messbereich breiter ausgebildet sein, um beispielsweise ein Anbaugerät in seiner vollen Breite erfassen zu können, so dass ein rechtwinkliges, mittiges Anfahren ermöglicht werden kann.

In einer besonders bevorzugten Ausgestaltung der Erfindung ist eine mit der Auswerteeinheit verbundene Ausgabeeinheit vorgesehen, durch welche ein Abstand zwischen der Arbeitsmaschine und einem Anbaugerät, insbesondere optisch und/oder akustisch, anzeigbar ist. Eine Ausgabeeinheit kann beispielsweise ein Bedienterminal der Arbeitsmaschine zur optischen und/oder akustischen Ausgabe der bestimmten Relativposition, und insbesondere des Abstandes des Anbaugerätes zu der Arbeitsmaschine sein. Eine Ausgabeeinheit kann auch in Form eines oder mehrerer, insbesondere jeweils einer Sensoreinheit zugeordneter, Lichtbalken, beispielsweise aus lichtemittierenden Dioden (LED), ausgebildet sein. Denkbar ist auch eine akustische Ausgabe des durch die Auswerteinheit bestimmten Abstandes über Lautsprecher, wobei jeweils einer Sensoreinheit ein Lautsprecher zugeordnet sein kann. Die Auswerteinheit des Sensorsystems kann in die Ausgabeeinheit integriert sein.

In einer besonders bevorzugten Ausgestaltung der Erfindung ist ein mit dem Sensorsystem verbundenes Lenksystem vorgesehen, durch welches die Arbeitsmaschine basierend auf den vom dem Sensorsystem bestimmten Abständen bei einer Aufnahme und/oder einem Absetzen des Anbaugerätes automatisch lenkbar und/oder fahrbar ist. Die Arbeitsmaschine kann ein automatisches Lenksystem aufweisen, wobei die Arbeitsmaschine basierend auf den von der Auswerteinheit bestimmten Abständen und/oder der Relativposition des Anbaugerätes automatisch lenkbar und/oder fahrbar sein kann. Dies hat den Vorteil, dass die Arbeitsbelastung des Bedieners gesenkt werden kann, da ein Anfahren an und/oder Wegfahren von einem Anbaugerät durch das automatische Lenken und/oder Fahren der Arbeitsmaschine erheblich vereinfacht werden kann.

In einer besonders bevorzugten Ausgestaltung der Erfindung ist eine Aufnahmevorrichtung eine Anbaukonsole für ein Anbaugerät in Form eines Frontladers, ein Kraftheber und/oder eine Anhängevorrichtung. Zur Aufnahme eines Frontlader, insbesondere eines Abstellfrontladers, kann die Arbeitsmaschine seitlich beabstandet, neben einer Motorraumverkleidung an jeder Seite eine Aufnahmekonsole aufweisen, an welcher der Frontlader lösbar festlegbar ist. Ein Kraftheber kann front- und/oder heckseitig an der Arbeitsmaschine angeordnet sein und beispielsweise in Form eines Drei-Punkt-Krafthebers ausgebildet sein. Unter eine Anhängevorrichtung im Sinne der Erfindung ist jeder Vorrichtung zur Aufnahme eines Anbaugerätes, Anhängers oder Arbeitsgerätes zu verstehen. Dies kann beispielsweise eine Bolzenkupplung, ein Zughaken, ein Zugpendel oder eine Kugelkopfkupplung sein.

Nachfolgend wird die Erfindung unter Bezugnahme auf die anliegenden Zeichnungen näher erläutert.

Es zeigt:
- Fig. 1:: eine perspektivische Ansicht einer landwirtschaftlichen Arbeitsmaschine mit einem abgesetzten Anbaugerät in Form eines Frontladers;
- Fig. 2:: eine detailliertere Darstellung der landwirtschaftlichen Arbeitsmaschine aus Figur 1; und
- Fig. 3:: eine Darstellung eines Aufnehmens eines Frontladers durch eine landwirtschaftliche Arbeitsmaschine in einer Draufsicht.

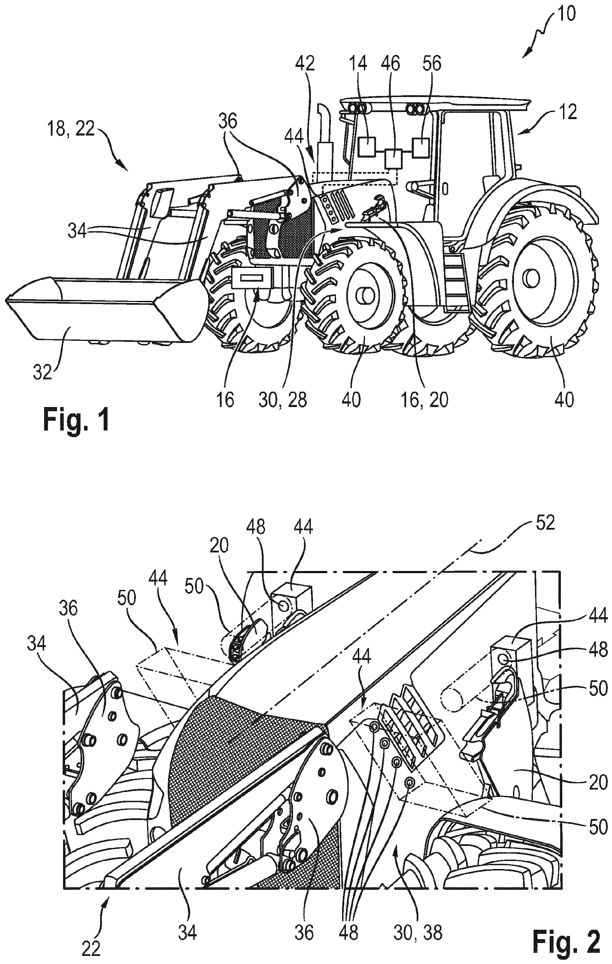

In Figur 1 ist eine landwirtschaftliche Arbeitsmaschine 10 in Form eines Traktors in einer perspektivischen Ansicht dargestellt, wobei der grundsätzliche Aufbau eines Traktors als dem Fachmann bekannt angesehen wird. Eine landwirtschaftliche Arbeitsmaschine 10 im Sinne der Erfindung kann jedes zur landwirtschaftlichen Arbeit einsetzbare Fahrzeug sein, beispielsweise ein Traktor, ein Frontlader, eine Baumaschine, oder eine selbstfahrende Erntemaschine wie ein Mähdrescher oder Feldhäcksler. Der Traktor weist zur Aufnahme eines Bedieners eine geschlossene Fahrerkabine 12 auf, wobei innerhalb der Fahrerkabine 12 eine Ausgabeeinheit 14 in Form eines Anzeige- und Bedienelements zur Anzeige von Informationen und/oder zur Bedienung der landwirtschaftlichen Arbeitsmaschine 10 angeordnet ist.

Die in Figur 1 dargestellte landwirtschaftliche Arbeitsmaschine 10 in Form eines Traktors ist mit unterschiedlichen Aufnahmevorrichtungen 16 ausgestattet, um je nach zu verrichtender Arbeit unterschiedliche Anbaugeräte 18 aufnehmen zu können. Die Aufnahmevorrichtungen 16 sind dabei in Form einer Anbaukonsole 20 für ein Anbaugerät 18 in Form eines Frontladers 22, einer Anhängevorrichtung 24 und eines heckseitig angeordneten Krafthebers (nicht dargestellt) ausgebildet. Ein Kraftheber 26, beispielsweise ein Drei-Punkt-Kraftheber, kann dabei frontseitig und/oder heckseitig an der landwirtschaftlichen Arbeitsmaschine 10 angeordnet sein. Eine Anhängevorrichtung 24 kann dabei jede Vorrichtung zur Aufnahme eines Anbaugerätes 18 wie einem Frontlader 22, einem Bodenbearbeitungsgerät oder einem Anhänger sein. Die Anhängevorrichtung 24 kann beispielsweise in Form einer Bolzenkupplung, eines Zughakens, einer Kupplungskugel, einer Kugelkopfkupplung oder eines Zugpendels ausgebildet sein.

Für Arbeiten mit Strohballen, Silageballen oder zum Überladen von Erntegut weist die landwirtschaftliche Arbeitsmaschine 10 zur Aufnahme eines Frontladers 22 Anbaukonsolen 20 auf, an welchen der Frontlader 22 lösbar festlegbar ist. Die Aufnahmekonsolen 20 sind dabei im Wesentlichen vertikal beiderseits eines Verkleidungselementes 58 der Arbeitsmaschine 10 in Form einer Motorraumverkleidung 28 angeordnet. Die Motorraumverkleidung 28 kann dabei verschwenkbar gelagert sein. Ein Verkleidungselement 58 der Karosserie 30 kann jedes verlagerbare oder feststehende Verkleidung der Karosserie 30 der landwirtschaftlichen Arbeitsmaschine 10 sein. Unter der Karosserie 30 ist im Sinne der Erfindung die gesamte äußere Form der Arbeitsmaschine 10 zu verstehen, insbesondere jene Teile, welche bei einem Aufnehmen und/oder Absetzten eines Anbaugerätes 18 mit dem Anbaugerät 18 in Kontakt kommen könnten, wie ein Fahrwerk, Reifen, die Fahrerkabine 12, eine Aufnahmevorrichtung 16, oder die Motorraumverkleidung 28. Der Frontlader 22 weist neben der eigentlichen Arbeitsvorrichtung, hier in Form einer Schaufel 32 ausgebildet, zwei Schwingen 34 auf, welche jeweils, insbesondere durch Hydraulikzylinder, verschwenkbar in einem Anbaurahmen 36 gelagert sind. Zur Befestigung des Frontladers 22 an der Arbeitsmaschine 10 sind die Anbaurahmen 36 jeweils lösbar mit den Anbaukonsolen 20 der Arbeitsmaschine 10 verbindbar. Bei einem Aufnehmen eines abgestellten Frontladers 22 muss der Traktor soweit zwischen die Anbaurahmen 36 und die Schwingen 34 gefahren werden, bis die Anbaurahmen 36 die Anbaukonsolen 20 kontaktieren. Die Anbaurahmen 36 und die Schwingen 34 werden dabei sehr dicht an der Karosserie 30 der Arbeitsmaschine 10, beispielsweise zwischen der Motorraumverkleidung 28 und frontseitigen Rädern 40 der Arbeitsmaschine 10, entlanggeführt. Zum Abstellen des Frontladers 22 ist nach dessen Lösen der Traktor zwischen den Anbaurahmen 36 und den Schwingen 34 herauszufahren. Um das Aufnehmen und Abstellen des Frontladers 22 zu vereinfachen, kann dieser in Form eines sogenannten Abstellfrontladers 22 konstruiert sein, welcher an den Schwingen 34 abklappbare Abstellstützen 38 aufweist, durch die der Frontlader 22 in einer Position abstellbar ist, in der die Anbaurahmen 36 im Wesentlichen in einer Höhe verbleiben, in der diese an den Anbaukonsolen 20 befestigt werden. Bei der Aufnahme und/oder bei dem Abstellen des Frontladers 22 erfordert das Heranfahren an und/oder das Wegfahren von dem Frontlader 22 eine hohe Aufmerksamkeit eines Bedieners der Arbeitsmaschine 10, um eine Kollision und damit eine Beschädigung der Arbeitsmaschine 10 zu vermeiden. Bei modernen Arbeitsmaschinen 10 wird dies oftmals noch durch eine unübersichtliche Karosserie 30, insbesondere Motorraumverkleidung 28, erschwert, da diese oftmals aufgrund größerer Motoren und Einrichtungen zur Abgasnachbehandlung unübersichtliche Abmessungen oder Formen aufweisen.

Erfindungsgemäß weist die landwirtschaftliche Arbeitsmaschine 10 ein arbeitsmaschinenseitig angeordnetes Sensorsystem 42 mit mindestens einer Sensoreinheit 44 und einer Auswerteinheit 46 auf, wobei durch das Sensorsystem 42 eine Relativposition des aufzunehmenden und/oder abzulegenden Anbaugerätes 18 relativ zu der Arbeitsmaschine 10 bestimmbar ist. Dabei sind durch die mindestens eine Sensoreinheit 44 Signale generierbar, welche von der Auswerteinheit 46 empfangen und ausgewertet werden. Die Auswerteeinheit 46 bestimmt basierend auf den Signalen der mindestens einen Sensoreinheit 44 die Relativposition des Anbaugerätes 18. Durch eine Ausgabeeinheit 14 kann dem Bediener der Arbeitsmaschine 10 die bestimmte Relativposition übermittelt werden. Die bestimmte Relativposition kann dem Bediener beispielsweise durch eine akustische und/oder optische Ausgabeeinheit 14 übermittelt werden. Dies kann beispielsweise über eine, jeweils einer Sensoreinheit 44 zugeordnetes akustisches Signal, wie ein positionsabhängiges Piepen, erfolgen. Eine optische Ausgabe kann beispielsweise über jeweils einer Sensoreinheit 44 zugeordnete balkenförmige Leuchten erfolgen, deren leuchtende Länge beispielsweise von der Relativposition, insbesondere einem Abstand zwischen Anbaugerät 18 und Karosserie 30, abhängig ist. Ebenso kann eine optische Ausgabe über eine bildliche Darstellung der Relativposition, beispielsweise auf einer Ausgabeeinheit 14 in Form einer Anzeige- und Bedieneinheit wie einem Terminal, erfolgen.

Das Sensorsystem 42 (Fig. 2) weist zwei Sensoreinheiten 44 auf, welche frontseitig vor den Anbaukonsolen 20, seitlich an gegenüberliegenden Seiten der Motorraumverkleidung 28 angeordnet sind. Die Sensoreinheiten 44 weisen dabei jeweils mehrere Sensoren 48 auf, welche beispielsweise in Form von Ultraschallsensoren ausgebildet sein können. Die Sensoren 48 sind in einer Reihe, im Wesentlichen senkrecht, insbesondere mit einer obenseitigen Neigung zur Front der Arbeitsmaschine 10 hin, seitlich an der Motorraumverkleidung 28 angeordnet. Durch die Anordnung der Sensoren 48 in einer Reihe weisen die Sensoreinheiten 44 jeweils eine längliche Erstreckung auf, wodurch ein Messbereich 50 der Sensoreinheit 44 ebenfalls eine längliche, insbesondere im Wesentlichen senkrechte, Erstreckung aufweist. Die längliche Erstreckung und die im Wesentlichen Anordnung des Messbereiches 50 hat den Vorteil, dass der Frontlader 22 unabhängig von der genauen vertikalen Anordnung seiner Schwingen 34 und Anbaurahmen 36 durch die Sensoreinheit 44 zuverlässig erfasst werden kann. Eine geometrische Ausgestaltung des Messbereiches 50, insbesondere eine Breite und/oder Erstreckung senkrecht zu der Karosserie 30, kann von der Art der jeweils eingesetzten Sensoren 48 abhängig sein. Durch diese Sensoreinheiten 44 kann eine Relativposition des Frontladers 22 zu der Karosserie 30 der Arbeitsmaschine dem Bediener angezeigt werden. Besonders kann ein Abstand des Frontladers 22, insbesondere dessen Schwingen 34 und/oder Anbaurahmen 36, zur Karosserie 30 gleichzeitig zu beiden Seiten der Motorraumverkleidung 28 bestimmt werden. Der beidseitig ermittelte Abstand zwischen Karosserie 30 und Frontlader 22 kann dem Bediener jeweils zusammen angezeigt werden, so dass eine Kollision mit dem Frontlader 22 bei einem Heranfahren und/oder Wegfahren von dem Frontlader 22 vermieden werden kann.

Weiterhin weist das Sensorsystem 42 an den Anbaukonsolen 20 jeweils eine Sensoreinheit 44 auf. Diese Sensoreinheiten 44 sind jeweils derart angeordnet und ausgestaltet, dass deren Messbereich im Wesentlichen parallel zu einer Längsachse 52 der Arbeitsmaschine 10 nach vorne in Richtung des Frontladers 22 gerichtet ist. Der Messbereich 50 kann dabei beispielsweise zylindrisch ausgebildet sein, um einen Abstand d zu dem Frontlader 22, insbesondere einem Anbaurahmen 36 des Frontladers 22, zu der Anbaukonsole 20 zu bestimmen. Hierdurch kann dem Bediener zuverlässig der Abstand d in Längsrichtung zwischen Frontlader 22 und der Anbaukonsole 36, insbesondere der Abstand auf der linken Seite d_{L} und der rechten Seite d_{R}, angezeigt werden.

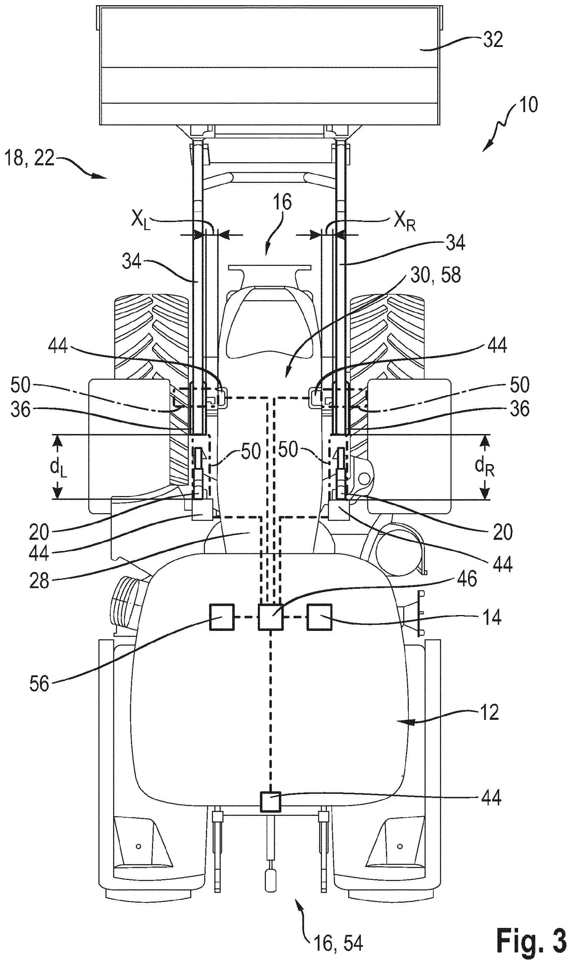

In Figur 3 ist in einer Draufsicht eine landwirtschaftliche Arbeitsmaschine 10 in Form eines Traktors bei der Aufnahme eines abgestellten Frontladers 22 dargestellt. Zur Bestimmung der Relativposition des Frontladers 22 relativ zu der Arbeitsmaschine 10, und insbesondere zur Karosserie 30, weist das Sensorsystem 42 an der Motorraumverkleidung 28 an jeder Seite sich gegenüberliegend angeordnet eine Sensoreinheit 44 auf. Durch diese an der linken und rechten Seite der Motorraumverkleidung 28 angeordneten Sensoreinheiten 44 ist jeweils ein seitlicher Abstand x_{L,R} des Frontladers 22 zur Karosserie 30 und insbesondere zur Motorraumverkleidung 28 bestimmbar. Der Abstand d_{L,R} in Längsrichtung zwischen den Anbaukonsolen 20 und den Anbaurahmen 36 des Frontladers 22 kann mittels zweier Sensoreinheiten 42 bestimmt werden, die an den Anbaukonsolen 20 angeordnet sind und im Wesentlichen parallel zur Längsachse 52 der Arbeitsmaschine 10 in Richtung des Frontladers 22 ausgerichtet sind.

Die landwirtschaftliche Arbeitsmaschine weist eine weitere Aufnahmevorrichtung 16 in Form eines heckseitig angeordneten Drei-Punkt-Krafthebers 54 auf. Eine Sensoreinheit 44, welche beispielsweise an der Fahrerkabine 12 angeordnet ist, kann bei Aktivierung einen heckseitig ausgerichteten Messbereich (nicht dargestellt) aufweisen, durch welchen eine Relativposition eines an der heckseitig angeordneten Aufnahmevorrichtung 16 aufzunehmenden Arbeitsgerätes (nicht dargestellt) bestimmbar ist. Moderne landwirtschaftliche Arbeitsmaschinen 10 weisen oftmals ein automatisches Lenksystem 56 auf, durch welches zumindest eine automatische Lenkung der Arbeitsmaschine 10 zur Spurführung ermöglicht werden kann. Darüber hinaus kann durch das Lenksystem ein automatisches Fahren der Arbeitsmaschine 10 in beide Fahrtrichtungen ermöglicht werden. Das Sensorsystem 42, insbesondere die Auswerteeinheit 46, kann mit einem derartigen Lenksystem 56 verbunden sein, so dass ein Heranfahren und/oder Wegfahren von einem Anbaugerät 18, insbesondere in Form eines Frontladers 22, basierend auf mindestens einer durch das Sensorsystem 42 bestimmten Relativposition des Anbaugerätes 18, automatisierbar ist. Die Bestimmung der Relativposition eines Anbaugerätes 18 kann kontinuierlich und/oder in Intervallen, beispielsweise Abstandsabhängig, erfolgen.

### Bezugszeichenliste

- 10: landwirtschaftliche Arbeitsmaschine
- 12: Fahrerkabine
- 14: Ausgabeeinheit
- 16: Aufnahmevorrichtung
- 18: Anbaugerät
- 20: Anbaukonsole
- 22: Frontlader
- 24: Anhängevorrichtung
- 26: Kraftheber
- 28: Motorraumverkleidung
- 30: Karosserie
- 32: Schaufel
- 34: Schwinge
- 36: Anbaurahmen
- 38: Abstellstütze
- 40: Rad
- 42: Sensorsystem
- 44: Sensoreinheit
- 46: Auswerteeinheit
- 48: Sensor
- 50: Messbereich
- 52: Längsachse
- 54: Kraftheber
- 56: Lenksystem
- 58: Verkleidungselement

- d_{L,R}: Abstand
- x_{L,R}: Abstand

## Patentansprüche

1. Landwirtschaftliche Arbeitsmaschine mit einer Karosserie (30), welche mindestens ein Verkleidungselement (58) und mindestens eine Aufnahmevorrichtung (16) zur Aufnahme eines Arbeitsgerätes (18) umfasst, wobei mindestens eine Aufnahmevorrichtung (16) in Form einer Anbaukonsole (20) für ein Anbaugerät (18) in Form eines Frontladers (22) ausgebildet ist, ein arbeitsmaschinenseitig angeordnetes Sensorsystem (42) mit mindestens einer Sensoreinheit (44) und einer Auswerteeinheit (46) vorgesehen ist, wobei durch das Sensorsystem (42) eine Relativposition eines aufzunehmenden und/oder abzulegenden Anbaugerätes (18) der Arbeitsmaschine (10) relativ zu der Arbeitsmaschine (10) bestimmbar ist, und die Karosserie (30) eine Motorraumverkleidung (28) umfasst, **dadurch gekennzeichnet, dass** mindestens eine Sensoreinheit (44) zur seitlichen Messung eines Abstands (x_{L,R}) eines Anbaugerätes (18) zur Karosserie (30) an der Motorraumverkleidung (28) angeordnet ist.

2. Arbeitsmaschine nach Anspruch 1, **dadurch gekennzeichnet, dass** eine Relativposition des Anbaugerätes (18) zu der Arbeitsmaschine (10) mittels einer Abstandsmessung ermittelbar ist.

3. Arbeitsmaschine nach Anspruch 1 oder 2, **dadurch gekennzeichnet, dass** das Sensorsystem (42) mindestens eine Sensoreinheit (42) umfasst, durch welche ein Abstand (x_{L,R}, d_{L,R}) eines Anbaugerätes (18) in einer Längsrichtung zur Karosserie (30) messbar ist.

4. Arbeitsmaschine nach einem der vorherigen Ansprüche, **dadurch gekennzeichnet, dass** mindestens eine Sensoreinheit (44) zur Messung eines Abstandes (d_{L,R}) in Längsrichtung an einer Aufnahmevorrichtung (16, 20) und/oder einer Fahrerkabine (12) angeordnet ist.

5. Arbeitsmaschine nach einem der vorherigen Ansprüche, **dadurch gekennzeichnet, dass** die Sensoreinheit (44) mindestens einen Sensor (48) aufweist, welcher nach einem akustischen, opto-elektronischen und/oder elektro-magnetischen Messprinzip arbeitet.

6. Arbeitsmaschine nach einem der vorherigen Ansprüche, **dadurch gekennzeichnet, dass** die Sensoreinheit (44) einen Messbereich (50) aufweist, wobei eine geometrische Ausgestaltung des Messbereiches (50) in Abhängigkeit einer Anzahl an Sensoren (48), der Art der Sensoren (48) und/oder der Anordnung der Sensoren (48) bestimmbar ist.

7. Arbeitsmaschine nach einem der vorherigen Ansprüche, **dadurch gekennzeichnet, dass** eine mit der Auswerteeinheit (46) verbundene Ausgabeeinheit (14) vorgesehen ist, durch welche ein Abstand (x_{L,R}, d_{L,R}) zwischen der Arbeitsmaschine (10) und einem Anbaugerät (18), insbesondere optisch und/oder akustisch, anzeigbar ist.

8. Arbeitsmaschine nach einem der vorherigen Ansprüche, **dadurch gekennzeichnet, dass** ein mit dem Sensorsystem (42) verbundenes Lenksystem (54) vorgesehen ist, durch welches die Arbeitsmaschine (10) basierend auf den vom dem Sensorsystem (42) bestimmten Abständen (x_{L,R}, d_{L,R}) bei einer Aufnahme und/oder einem Absetzen des Anbaugerätes (18) automatisch lenkbar und/oder fahrbar ist.

9. Arbeitsmaschine nach einem der vorherigen Ansprüche, **dadurch gekennzeichnet, dass** eine Aufnahmevorrichtung (16) eine Anbaukonsole (20) für ein Anbaugerät (18) in Form eines Krafthebers (54) und/oder einer Anhängevorrichtung (24) ist.

## Claims

1. An agricultural working machine having a bodywork (30) which includes at least one casing element (58) and at least one mounting device (16) for mounting a working implement (18)
wherein at least one mounting device (16) is in the form of an attachment bracket (20) for an attachment implement (18) in the form of a frontloader (22),
there is provided a sensor system (32) arranged at the working machine side and having at least one sensor unit (44) and an evaluation unit (46), wherein a relative position of an attachment implement (18) which is to be picked up and/or put down of the working machine (10) can be determined relative to the working machine (10) by the sensor system (42) and the bodywork (30) includes an engine compartment casing (28),
**characterised in that**
at least one sensor unit (44) for lateral measurement of a spacing (x_{L,R}) of an attachment implement (18) relative to the bodywork (30) is arranged on the engine compartment casing (28).

2. A working machine according to claim 1 **characterised in that** a relative position of the attachment implement (18) with respect to the working machine (10) can be determined by means of distance measurement.

3. A working machine according to claim 1 or claim 2 **characterised in that** the sensor system (42) includes at least one sensor unit (42) by which a spacing (x_{L,R}, d_{L,R}) of an attachment implement (18) can be measured in a longitudinal direction with respect to the bodywork (30).

4. A working machine according to one of the preceding claims **characterised in that** at least one sensor unit (44) for measuring a spacing (d_{L,R}) in the longitudinal direction is arranged at a mounting device (16, 20) and/or a driver cab.

5. A working machine according to one of the preceding claims **characterised in that** the sensor unit (44) has at least one sensor (48) which operates in accordance with an acoustic, opto-electronic and/or electromagnetic measurement principle.

6. A working machine according to one of the preceding claims **characterised in that** the sensor unit (44) has a measurement region (50), wherein a geometrical configuration of the measurement region (50) can be determined in dependence on a number of sensors (48), the nature of the sensors (48) and/or the arrangement of the sensors (48).

7. A working machine according to one of the preceding claims **characterised in that** there is provided an output unit (14) which is connected to the evaluation unit (46) and by which a spacing (x_{L,R}, d_{L,R}) between the working machine (10) and an attachment implement (18) can be displayed, in particular optically and/or acoustically.

8. A working machine according to one of the preceding claims **characterised in that** there is provided a steering system (54) which is connected to the sensor element (42) and by which the working machine (10) can be automatically steered and/or driven based on the spacings (x_{L,R}, d_{L,R}) determined by the sensor system (42) when picking up and/or setting down the attachment implement (18).

9. A working machine according to one of the preceding claims **characterised in that** a mounting device (16) is an attachment bracket (20) for an attachment implement (18) in the form of a power lifter (54) and/or an attachment device (24).

## Revendications

1. Machine de travail agricole comprenant une carrosserie (30) qui comporte au moins un élément de garniture (58) et au moins un dispositif récepteur (16) pour recevoir un outil de travail (18), au moins un dispositif récepteur (16) étant conçu sous la forme d'une console de montage (20) pour un outil rapporté (18) en forme de chargeur frontal (22), un système de capteur (42) disposé côté machine de travail étant prévu avec au moins une unité de capteur (44) et une unité d'analyse (46), le système de capteur (42) permettant de déterminer une position relative d'un outil rapporté à recevoir et/ou à déposer (18) de la machine de travail (10) par rapport à la machine de travail (10), et la carrosserie (30) comportant une garniture de compartiment-moteur (28), **caractérisée en ce qu'**au moins une unité de capteur (44) est disposée sur la garniture de compartiment-moteur (28) pour la mesure latérale d'une distance (x_{L,R}) de l'outil rapporté (18) à la carrosserie (30).

2. Machine de travail selon la revendication 1, **caractérisée en ce qu'**une position relative de l'outil rapporté (18) par rapport à la machine de travail (10) peut être déterminée au moyen d'une mesure de distance.

3. Machine de travail selon la revendication 1 ou 2, **caractérisée en ce que** le système de capteur (42) comporte au moins une unité de capteur (42) qui permet de mesurer une distance (x_{L,R}, d_{L,R}) d'un outil rapporté (18) par rapport à la carrosserie (30) dans une direction longitudinale.

4. Machine de travail selon une des revendications précédentes, **caractérisée en ce qu'**au moins une unité de capteur (44) est disposée sur un dispositif récepteur (16, 20) et/ou sur une cabine de conduite (12) pour mesurer une distance (d_{L,R}) dans la direction longitudinale.

5. Machine de travail selon une des revendications précédentes, **caractérisée en ce que** l'unité de capteur (44) comporte au moins un capteur (48) qui fonctionne selon un principe de mesure acoustique, optoélectronique et/ou électromagnétique.

6. Machine de travail selon une des revendications précédentes, **caractérisée en ce que** l'unité de capteur (44) comporte une plage de mesure (50), une configuration géométrique de la plage de mesure (50) pouvant être déterminée en fonction du nombre de capteurs (48), du type des capteurs (48) et/ou de l'agencement des capteurs (48).

7. Machine de travail selon une des revendications précédentes, **caractérisée en ce qu'**il est prévu une unité de sortie (14) qui est reliée à l'unité d'analyse (46) et qui permet d'afficher, en particulier optiquement et/ou acoustiquement, une distance (x_{L,R}, d_{L,R}) entre la machine de travail (10) et un outil rapporté (18).

8. Machine de travail selon une des revendications précédentes, **caractérisée en ce qu'**il est prévu un système de direction (54) qui est relié au système de capteur (42) et qui, lors d'une réception et/ou d'une dépose de l'outil rapporté (18), permet de diriger et/ou de déplacer automatiquement la machine de travail (10) sur la base des distances (x_{L,R}, d_{L,R}) déterminées par le système de capteur (42).

9. Machine de travail selon une des revendications précédentes, **caractérisée en ce qu'**un dispositif récepteur (16) est une console de montage (20) pour un outil rapporté (18) en forme de relevage (54) et/ou de dispositif d'attelage (24).
